# EUROPÄISCHE PATENTANMELDUNG

(11) **EP 1 746 531 A1**
(43) Veröffentlichungstag der Anmeldung: **24.01.2007**
(21) Anmeldenummer: 05015611.6
(22) Anmeldetag: 19.07.2005
(51) Int. Cl.: G06K 19/16, G06K 7/10, B42D 15/10, G09F 3/02

(54) **Maschinenlesbares Folienmaterial mit optisch aktiver Struktur, Verfahren zu dessen Herstellung und dessen Verwendung**

(71) Anmelder: Hueck Folien Ges.m.b.H, 4342 Baumgartenberg (AT)
(72) Erfinder: Zoister, Stefan Dipl.-Ing(FH), 4320 Perg (AT); Bergsmann, Martin Dr., 4020 Linz (AT); Kastner, Friedrich Dr., 4710 Grieskirchen (AT); Trassl, Stephan, 95478 Kemnath (DE); Reich, Peter, 92712 Pirk (DE); Kroczynski, Udo, 92637 Weiden (DE)
(74) Vertreter: Landgraf, Elvira

(57) **Zusammenfassung**

Die Erfindung betrifft ein FoIienmaterial bestehend aus einem Trägersubstrat und einer optisch aktiven Struktur, wobei die optisch aktive Struktur selbst zusätzlich ein maschinenlesbares Merkmal aufweist.
Unter optisch aktiver Struktur werden beispieIsweise Oberflächenreliefstrukturen, Hologramme, Beugungsstrukturen, Beugungsgitter Kinegramme und dergleichen verstanden.
Unter maschinenlesbarem Merkmal wird beispielsweise ein Binärcode, ein Barcode, eine Datenmatrix oder Zeichen, Schriften, Muster, Buchstaben, Linien, geometrische Figuren und dergleichen verstanden. Ebenso kann ein EAN Code als maschinenlesbares Merkmal eingebracht werden.

## Beschreibung

Die Erfindung betrifft eine maschinenlesbare Hologrammfolie, wobei das primäre Sicherheitsmerkmal eine optisch aktive Struktur ist, kombiniert mit einem sekundären maschinenlesbaren Sicherheitsmerkmal.

Folienmaterialien mit optisch aktiven Strukturen und deren Verwendung sind bekannt. So können derartige Folienmaterialien beispielsweise für dekorative Zwecke und/oder zur Verhinderung von Fälschungen oder Nachahmungen von beispielsweise Wertdokumenten, Datenträgern und/oder Verpackungen und dergleichen aufgebracht oder in diese eingebettet werden.

Aus der WO 94/18609 A ist beispielsweise ein Verfahren zur gleichzeitigen Replikation und direkten Applikation eines Hologramms oder eines anderen Beugungsgitters auf einen Bedruckstoff, insbesondere auf Papier oder Karton, mittels einer die Oberflächenreliefstruktur tragenden Matrize bekannt, bei dem diese Struktur in eine strahlungshärtbare Lackschicht abgeformt wird, wobei die Härtung der Lackschicht von der Matrizenseite her durch die strahlungsdurchlässige Matrizenoberfläche erfolgt. Im wesentlichen erfolgt dabei die Aushärtung der das Relief aufnehmenden Lackschicht vor Abnahme der Matrize vom Papier bzw. Karton. Nach diesem Verfahren sollen sowohl selbstklebende Produkte als auch Heißsiegelfolien mit Diffraktionsstrukturen herstellbar sein.

Aus der EP 1 318 016 A sind bahnförmige Materialien mit vollständig oder teilweise transferierbaren oder vollständig oder motivbegrenzt haftenden Oberflächenstrukturen, die durch Abformung in eine bis zum Gelpunkt gehärtete strahlungshärtbare Lackschicht, mit nachfolgender weiterer Aushärtung der Lackschicht hergestellt werden, bekannt, die auch für dekorative Zwecke und/oder zum Schutz vor Fälschungen und/oder Nachahmungen auf Wertdokumenten und dergleichen verwendet werden.

Aus der DE 41 30 896 sind Schichtverbunde mit Beugungsstrukturen und deren Verwendung zur Erhöhung der Fälschungssicherheit bekannt.

Aufgabe der vorliegenden Erfindung war es, ein Folienmaterial bereitzustellen, dass zusätzlich zum primären Sicherheitsmerkmal, nämlich einer optisch aktiven Struktur ein sekundäres maschinenlesbares Merkmal aufweist.

Gegenstand der Erfindung ist daher ein Folienmaterial bestehend aus einem Trägersubstrat und einer optisch aktiven Struktur, dadurch gekennzeichnet, dass die optisch aktive Struktur selbst zusätzlich ein maschinenlesbares Merkmal aufweist.

Unter optisch aktiver Struktur werden beispielsweise Oberflächenreliefstrukturen, Hologramme, Beugungsstrukturen, Beugungsgitter Kinegramme und dergleichen verstanden.

Unter maschinenlesbarem Merkmal wird beispielsweise ein Binärcode, ein Barcode, eine Datenmatrix oder Zeichen, Schriften, Muster, Buchstaben, Linien, geometrische Figuren und dergleichen verstanden. Ebenso kann ein EAN Code als maschinenlesbares Merkmal eingebracht werden.

Ferner kann das Merkmal im Detail durch Variieren der Form, der Größe, der Farbe sowie der Ausrichtung und dem Abstand der Einzelelemente gestaltet werden.
Dabei können beispielsweise Linien und dergleichen derart eingebracht werden, dass nur unter einem bestimmten Betrachtungswinkel eine Farbe, eine Mattierung und dergleichen erkennbar ist. Durch die Modulation der Abstände der Linien wird die Farbe geändert.
Vorzugsweise werden diese Merkmale optisch erzeugt.

Das maschinenlesbare Merkmal ist direkt in die optisch aktive Struktur integriert und nicht in einer weiteren Schicht vorhanden.

Die optisch aktive Struktur wird vorzugsweise in einen auf einem Trägersubstrat aufgebrachten Prägelack eingebracht.

Als Trägersubstrat für das erfindungsgemäße Sicherheitsmerkmal kommen beispielsweise Trägerfolien vorzugsweise flexible Kunststofffolien, beispielsweise aus PI, PP, MOPP, PE, PPS, PEEK, PEK, PEI, PSU, PAEK, LCP, PEN, PBT, PET, PA, PC, COC, POM, ABS, PVC in Frage. Die Trägerfolien weisen vorzugsweise eine Dicke von 3 - 700 µm, bevorzugt 3 - 200 µm, besonders bevorzugt 3 - 50 µm auf.

Ferner können als Trägersubstrat auch Metallfolien, beispielsweise Al-, Cu-, Sn-, Ni-, Fe- oder Edelstahlfolien mit einer Dicke von 5 - 200 µm, vorzugsweise 10 bis 80 µm, besonders bevorzugt 20 - 50 µm dienen. Die Folien können auch oberflächenbehandelt, beschichtet oder kaschiert beispielsweise mit Kunststoffen oder lackiert sein.

Ferner können als Trägersubstrate auch Papier oder Verbunde mit Papier, beispielsweise Verbunde mit Kunststoffen mit einem Flächengewicht von 20 - 500 g/m², vorzugsweise 40 - 200 g/m² verwendet werden.

Ferner können als Trägersubstrate Gewebe oder Vliese, wie Endlosfaservliese, Stapelfaservliese und dergleichen, die gegebenenfalls vernadelt oder kalandriert sein können, verwendet werden. Vorzugsweise bestehen solche Gewebe oder Vliese aus Kunststoffen, wie PP, PET, PA, PPS und dergleichen, es können aber auch Gewebe oder Vliese aus natürlichen, gegebenenfalls behandelten Fasern, wie Viskosefaservliese eingesetzt werden. Die eingesetzten Gewebe oder Vliese weisen ein Flächengewicht von etwa 20 g/m² bis 500 g/m² auf. Gegebenenfalls können diese Gewebe oder Vliese oberflächenbehandelt sein.

Das Trägersubstrat kann dabei zur Herstellung von Transferfolien mit einer bekannten Transfer- oder Trennschicht versehen sein, oder bereits funktionelle Schichten aufweisen.

Gegebenenfalls kann das Trägersubstrat bzw. die darauf befindlichen Schichten auch eine organische oder anorganische Hilfsschicht zur Einstellung einer definierten Haftung aufweisen.

Der auf das Trägersubstrat Prägelack kann ein strahlungshärtbarer, beispielsweise eine UV- härtbarer oder ein strahlungshärtbarer Lack oder ein volumengetrennter 2-Komponenten-Prägelacksystensein sein. Der Prägelack kann durch bekannte Beschichtungsverfahren wie beispielsweise durch Aufstreichen, Gießen, Sprühen, Drucken (Siebdruck-, Tiefdruck- Flexodruck, oder Digitaldruckverfahren) oder Walzenauftragsverfahren aufgebracht werden.

In diesen Prägelack wird die optisch aktive Struktur eingebracht.
Dabei wird in die optisch aktive Struktur gleichzeitig beispielsweise ein Strichgitter integriert.
Dieser Bereich ist bei der Betrachtung mit freiem Auge nicht erkennbar und auch unter Vergrößerung kaum zu erkennen.

Die eingebrachten zusätzlichen mit freiem Auge nicht erkennbaren Strichgitter können verschiedene definierte Orientierung aufweisen.
Ferner kann das integrierte Merkmal einen Mikrotext darstellen und beispielsweise mittels Laser, Elektronenstrahllithographie oder Ionenstrahllithographie in den Prägelack eingebracht werden.

Das Strichgitter weißt vorzugsweise 20 bis 25 000 l/mm auf.

In einer besonderen Ausführungsform können mehrere entsprechend ausgestaltete Strichgitter ein Miniaturelement bilden.

Diese Strichgitter weisen im Gegensatz zu einem Hologramm, das aufgrund unterschiedlicher Richtungen der Prägestrukturen kein messbares Beugungsbild ergibt, ein Beugungsbild mit einem Hauptmaximum und Nebenmaximum auf.
Dieses Beugungsbild kann durch ein entsprechendes Lesegerät ausgelesen werden.
Ein derartiges Lesegerät ist beispielsweise in AT 412 513 B beschrieben. Für jede definierte Richtung des Strichgitters wird ein eigenes Lesegerät zur Erfassung eingesetzt.

Das Lesegerät erkennt durch ein in der optisch aktiven Struktur integriertes Startsignal den Beginn des eingebrachten Codes und kann so den Code bzw. dessen Vorhandensein erkennen, identifizieren, wodurch die Authentizität des Codes nachgewiesen werden kann.

Der Code kann in Verbindung zu verschiedenen anderen funktionellen oder sonstigen Merkmalen des Folienmaterials oder dessen Anwendung stehen oder individuell definiert sein.

So kann beispielsweise eine geschlossene kreisförmige, ovale oder elliptische Struktur der optisch aktiven Struktur partiell oder auch vollflächig mit einem Strichgitter, das einen bestimmten Code definiert, versehen sein.
Analog können auch Linien, Balken, Kurven (oder andere Formen) und dergleichen der optischen Struktur teilweise mit einem Strichgitter versehen sein.
Die Detektion mittels des Lesegerätes erfolgt durch entsprechende Situierung des Sensors des entsprechenden Lesegerätes, beispielsweise normal zur oder quer zur Längsrichtung oder in einem definierten Winkel, entsprechend der Lage des Strichgitters beispielsweise in einem Winkel von 45°, 30 ° usw.

Die optisch aktive Struktur mit dem integrierten Strichgitter kann anschließend vollflächig oder partiell mit einer Reflexionsschicht oder einer metallischen oder einer metallisch erscheinenden oder farbigen metallischen Schicht versehen werden.

Dabei kann innerhalb der Struktur eine entsprechende Fläche auch zur Glanzmessung der Elemente definiert werden und auch in optisch ansprechender Form integriert werden.

Die Aufbringung dieser Schichten kann je nach Zusammensetzung durch ein bekanntes Druckverfahren oder durch Bedampfen, Sputtern oder Galvanisieren erfolgen.

Zur Herstellung einer partiellen Metallisierung kann entweder die Struktur partiell bedruckt oder unter Verwendung einer Maske partiell metallisiert werden.

Ferner ist es auch möglich partiell metallisierte Strukturen durch partielles Demetallisieren einer vollflächigen Metallisierung, beispielsweise durch Ablösen einer unter der vollflächigen Metallisierung befindlichen partiellen Lackschicht oder durch Ätzen der Metallschicht herzustellen.

Auf das Trägersubstrat können weiters ein- oder beidseitig eine oder mehrere funktionelle Schichten aufgebracht sein oder anschließend auf die optisch aktive Struktur aufgebracht werden, wobei jeweils zur Verbesserung der Haftfähigkeit Hilfsschichten, die aus organischen oder anorganischen Materialien bestehen können, zwischen den einzelnen Schichten vorhanden sein können.

Die funktionellen Schichten sind allerdings so aufgebracht, dass von mindestens einer Betrachtungsseite die optisch aktive Struktur mit dem integrierten Strichgitter zumindest partiell erkennbar ist.

Als funktionellen Schichten kommen visuell erkennbare und/oder maschinenlesbare Schichten in Frage.

Die Aufbringung der Schichten kann durch ein beliebiges Verfahren, beispielsweise durch Tiefdruck, Flexodruck, Siebdruck, Digitaldruck und dergleichen erfolgen.
Die einzelnen Merkmale können vollflächig oder partiell, beispielsweise in Form von Mustern, Linien, Buchstaben, Zeichen, geometrischen Formen, Raster und dergleichen aufgebracht werden.

Zur Aufbringung eines Merkmals mit optischen Eigenschaften können pigmentierte oder nicht pigmentierte Farb- oder Lackzusammensetzungen verwendet werden. Als Pigmente können alle bekannten Pigmente, beispielsweise Pigmente auf anorganischer Basis, wie Titandioxid, Zinksulfid, Kaolin, ITO, ATO, FTO, Aluminium, Chrom- und Siliciumoxide, oder Pigmente auf organischer Basis, wie Phthalocyaninblau, i-Indolidingelb, Dioxazinviolett und dergleichen als auch farbige und/oder verkapselte Pigmente in chemisch, physikalisch oder reaktiv trocknenden Bindemittelsystemen verwendet werden. Als Farbstoffe kommen beispielsweise 1,1- oder 1,2- Chrom-Cobalt-Komplexe in Frage.
Dabei sind lösungsmittelhaltige Farben- und/oder Lacksysteme, wässrige und auch lösungsmittelfreie Lacksysteme verwendbar.
Als Bindemittel kommen verschiedene natürliche oder synthetische Bindemittel in Frage.

Ferner können Farben oder Lacke mit lumineszierenden, beispielsweise phosphoreszierenden oder fluoreszierenden Eigenschaften, Lacke mit definiertem Brechungsindex oder thermochrome Farben aufgebracht werden.

In einer besonderen Ausführungsform kann eine Schicht mit farbgebenden oder lumineszierenden, insbesondere fluoreszierenden Eigenschaften als aufgedruckten Mikrotext oder Makrotext im Positiv- oder Negativdruck vorhanden sein, wobei der Druck auch gerastert sein kann. Unter Text bzw. Mikrotext werden in diesem Zusammenhang Buchstaben, Symbole, Zeichen, Linien und deren Abfolgen verstanden, die eine Größe von etwa 20 - 500 µm vorzugsweise 150 - 400 µm aufweisen.

Ferner können auch Merkmale aufgebracht werden, die unter unterschiedlichen Betrachtungswinkeln unterschiedliche Farbeffekte (Farbkippeffekt) zeigen, aufgebracht werden.
Diese Merkmale bestehend dann aus mindestens einer elektromagnetische Wellen reflektierenden Schicht, einer Abstandsschicht und einer Schicht gebildet von metallischen Clustern.

Dabei wird vorteilhafterweise vorerst eine partielle oder vollflächige elektromagnetische Wellen reflektierende Schicht und anschließend eine oder mehrere partielle und/oder vollflächige polymere Schichten definierter Dicke aufgebracht. Anschließend wird auf die Abstandschicht eine Schicht gebildet aus metallischen Clustern, die mittels eines vakuumtechnischen Verfahrens oder aus lösungsmittelbasierten Systemen hergestellt wird, aufgebracht.

Zur Einstellung elektrischer Eigenschaften, beispielsweise Leitfähigkeit, können beispielsweise Graphit, Ruß, leitfähige organische oder anorganische Polymere, Metallpigmente (beispielsweise Kupfer, Aluminium, Silber, Gold, Eisen, Chrom und dergleichen), Metalllegierungen wie Kupfer-Zink oder Kupfer-Aluminium oder auch amorphe oder kristalline keramische Pigmente wie ITO, FTO, ATO und dergleichen zugegeben werden. Weiters können auch dotierte oder nicht dotierte Halbleiter wie beispielsweise Silicium, Germanium, Galliumarsenid, Arsen oder Ionenleiter wie amorphe oder kristalline Metalloxide oder Metallsulfide als Zusatz verwendet werden. Ferner können zur Einstellung der elektrischen Eigenschaften der Schicht polare oder teilweise polare Verbindungen wie Tenside, oder unpolare Verbindungen wie Silikonadditive oder hygroskopische oder nicht hygroskopische Salze verwendet oder zugesetzt werden. Ebenso können intrinsisch leitfähige organische Polymere wie Polyanilin, Polyacetylen, Polyethylendioxythiophen und/oder Polystyrolsulfonat zugesetzt werden.

Zur Einstellung der magnetischen Eigenschaften können paramagnetische, diamagnetische und auch ferromagnetische Stoffe, wie Eisen, Nickel, Barium, und Cobalt oder deren Verbindungen oder Salze (beispielsweise Oxide oder Sulfide) verwendet werden. Besonders geeignet sind Fe(II)- und Fe(III)-Oxide, Barium- bzw. Cobaltferrite, seltene Erden und dergleichen.

Die optischen Eigenschaften der Schicht lassen sich durch sichtbare Farben bzw. Pigmente, lumineszierende Farbstoffe bzw. Pigmente, die im sichtbaren, im UV-Bereich oder im IR-Bereich fluoreszieren oder phosphoreszieren, wärmeempfindliche Farben bzw. Pigmente, Effektpigmente, wie Flüssigkristalle, Perlglanz-, Bronzen und/oder Multilayer-Farbumschlagspigmente beeinflussen. Diese sind in allen möglichen Kombinationen einsetzbar.
Es können auch verschiedene Eigenschaften durch Zufügen verschiedener oben genannter Zusätze kombiniert werden. So ist es möglich angefärbte und/oder leitfähige Magnetpigmente zu verwenden. Dabei sind alle genannten leitfähigen Zusätze verwendbar.
Speziell zum Anfärben von Magnetpigmenten lassen sich alle bekannten löslichen und nicht löslichen Farbstoffe bzw. Pigmente verwenden. So kann beispielsweise eine braune Magnetfarbe durch Zugabe von Metallen in ihrem Farbton metallisch, beispielsweise silbrig eingestellt werden.

Alle Farbstoffe und Pigmente lassen sich einzeln oder auch in Kombination mit unterschiedlichen natürlichen oder synthetischen Bindemitteln, wie z.B. natürliche Öle und Harze, wie Phenolformaldehyd, Harnstoff-, Melamin-, Keton-, Aldehyd-, Epoxy-, Polyterpenharzen verwenden. Als zusätzliche Bindemittel können beispielsweise Polyester, Polyvinylakohole, Polyvinylacetate, - ether, - propionate und -chloride, Poly(methyl)acrylate, Polystyrole, Olefine, Nitrocellulose, Polyisocyanat, Urethansysteme und andere benutzt werden.

Ferner können die erfindungsgemäßen Folienmaterialien mit einer Schutzlackschicht ein- oder beidseitig versehen sein. Der Schutzlack kann pigmentiert oder nicht pigmentiert sein, wobei als Pigmente alle bekannte Pigmente oder Farbstoffe, beispielsweise TiO₂, ZnS, Kaolin, ATO, FTO, Aluminium, Chrom- und Siliziumoxide oder beispielsweise organische Pigmente wie Phthalocyaninblau, i-Indolidingelb, Dioxazinviolett und dergleichen verwendet werden können. Ferner können lumineszierende Farbstoffe bzw. Pigmente, die im sichtbaren, im UV-Bereich oder im IR-Bereich fluoreszieren bzw. phosphoreszieren, Effektpigmente, wie Flüssigkristalle, Perlglanz, Bronzen und/oder Multilayer-Farbumschlagpigmente und wärmeempfindliche Farben bzw. Pigmente zugegeben werden. Diese sind in allen möglichen Kombinationen einsetzbar. Zusätzlich können auch phosphoreszierende Pigmente allein oder in Kombination mit anderen Farbstoffen und/oder Pigmenten eingesetzt werden.

Ferner können die erfindungsgemäßen Folienmaterialien ein- oder beidseitig mit einem Heiß- oder Kaltsiegelkleber oder einer Selbstklebebeschichtung zur Aufbringung auf oder zur Einbettung in ein Substrat versehen sein.

Ferner können die erfindungsgemäßen Folienmaterialien mit einem oder mehreren Trägersubstraten, die gegebenenfalls funktionelle und/oder dekorative Schichten aufweisen, gegebenenfalls unter Verwendung eines Kaschierklebers kaschiert sein.

Das Folienmaterial ist gegebenenfalls nach entsprechender Konfektionierung daher als Sicherheitsmerkmale in Datenträgern, insbesondere Wertdokumenten wie Ausweisen, Karten, Banknoten oder Etiketten, Siegeln und dergleichen geeignet, aber auch als Verpackungsmaterial beispielsweise in der pharmazeutischen, der Elektronik- und/oder Lebensmittelindustrie, beispielsweise in Form von Blisterfolien, Faltschachteln, Abdeckungen, Folienverpackungen und dergleichen geeignet.

Ferner können entsprechende Sicherheitsmerkmale auch in oder auf den verpackten Gegenständen oder Gütern beigelegten Dokumenten, wie Beipackzettel, Gebrauchs- oder Montageanleitungen, Herkunftsnachweisen und dergleichen vorgesehen sein.

Für die Anwendung als Sicherheitsmerkmale wird das Folienmaterial bzw. Folienmaterialien bevorzugt in Streifen oder Fäden oder Patches geschnitten, wobei die Breite der Streifen oder Fäden vorzugsweise 0,05 - 10 mm betragen kann und die Patches vorzugsweise mittlere Breiten bzw. Längen von 0,3 - 20 mm.

Für die Anwendung in oder auf Verpackungen wird das Folienmaterial bevorzugt in Streifen, Bänder, Fäden oder Patches geschnitten, wobei die Breite der der Fäden, Streifen bzw. Bänder vorzugsweise 0,05 - 50 mm beträgt und die Patches vorzugsweise mittlere Breiten und Längen von 0,5 - 200 mm aufweisen.

Ein entsprechender konfektionierter Sicherheitsfaden oder -streifen kann auch als Randverstärkung von Verpackungen, Wertdokumenten und dergleichen im Bereich der Kanten aber auch als beispielsweise Längs- und/oder Quer - Verstärkung in der Verpackung oder im Wertdokument verwendet werden, wobei auch jeweils mehrere Fäden oder Streifen in definiertem Abstand zueinander vorgesehen sein können.

## Patentansprüche

1. Folienmaterial bestehend aus einem Trägersubstrat und einer optisch aktiven Struktur, **dadurch gekennzeichnet, dass** die optisch aktive Struktur selbst zusätzlich ein maschinenlesbares Merkmal aufweist.

2. Folienmaterial nach Anspruch 1, **dadurch gekennzeichnet, dass** das zusätzliche maschinenlesbare Merkmal in Form eines Strichgitters vorliegt.

3. Folienmaterial nach einem der Ansprüche 1 oder 2, **dadurch gekennzeichnet, dass** das durch mehrere Strichgitter ein Miniaturelement gebildet wird.

4. Folienmaterial nach einem der Ansprüche 1 bis 3, **dadurch gekennzeichnet, dass** das/die Strichgitter in Form eines Codes vorliegt/vorliegen.

5. Folienmaterial nach einem der Ansprüche 1 bis 3, **dadurch gekennzeichnet, dass** das/die Strichgitter in Form eines 1 oder 2 - dimensionalen Barcodes vorliegt/vorliegen.

6. Folienmaterial nach Anspruch 1, **dadurch gekennzeichnet, dass** das maschinenlesbare Merkmal durch Variieren der Form, der Größe, der Farbe und/oder der Ausrichtung und/oder dem Abstand der Einzelelemente gestaltet wird.

7. Folienmaterial nach einem der Ansprüche 1 bis 6, **dadurch gekennzeichnet, dass** das zusätzliche maschinenlesbare Merkmal 20 - 25000 l/mm aufweist.

8. Folienmaterial nach einem der Ansprüche 1 bis 6, **dadurch gekennzeichnet, dass** das Folienmaterial weitere optische, elektrisch leitfähige und/oder magnetische Merkmale aufweist.

9. Sicherheitselement hergestellt aus einem Folienmaterial gemäß einem der Ansprüche 1 bis 8.

10. Sicherheitsdokumente, Datenträger, Wertdokumente aufweisend ein Sicherheitselement nach Anspruch 9.
